# EUROPÄISCHE PATENTSCHRIFT

(11) **EP 2 608 708 B1**
(45) Veröffentlichungstag und Bekanntmachung des Hinweises auf die Patenterteilung: **10.02.2016**
(21) Anmeldenummer: 11758138.9
(22) Anmeldetag: 16.08.2011
(51) Int. Cl.: A47J 43/07

(54) **KÜCHENGERÄT**
KITCHEN APPLIANCE
APPAREIL DE CUISINE

(30) Priorität: 24.08.2010 DE 102010039721
(43) Veröffentlichungstag der Anmeldung: 03.07.2013
(73) Patentinhaber: BSH Hausgeräte GmbH, 81739 München (DE)
(72) Erfinder: BRECKO, Ales, 3000 Celje (SI); BLAGOTINSEK, Andrej, 2380 Slovenj Gradec (SI)
(86) Internationale Anmeldenummer: PCT/EP2011/064078
(87) Internationale Veröffentlichungsnummer: WO 2012/025430

(56) Entgegenhaltungen:
- WO-A1-2008/132429
- US-A- 2 616 673

## Beschreibung

### Hintergrund der Erfindung

Die vorliegende Erfindung betrifft ein Küchengerät, insbesondere eine Küchenmaschine, mit einem Grundkörper, einem Schwenkarm, der schwenkbar am Grundkörper angeordnet ist, und einer Hebeleinrichtung zum Unterstützen einer Schwenkbewegung des Schwenkarms.

### Stand der Technik

Küchenmaschine bzw. Universalküchenmaschinen sind üblicherweise elektrische Küchengeräte, die bekanntermaßen zum Kneten, Rühren, Raspeln, Pürieren oder Entsaften eingesetzt werden. Diese Geräte bestehen aus einer Grundeinheit mit einer Rühr- oder Auffangschüssel und verschiedenen Anbauteilen, beispielsweise Zerkleinerer, Mixaufsatz, Getreidemühle oder Saftpresse sowie verschiedenen Einsätzen (Schneid- und Raspelscheibe, Knethaken, Schlag- und Rührbesen). Um diese oben genannten Funktionen auszuüben, weisen Küchenmaschinen eine Vielzahl an Bearbeitungswerkzeuge auf. Die Bearbeitungswerkzeuge können scheiben-, trommel- oder kegelförmig sein. Einige Geräte erlauben das Aufstecken einzelner Knethaken oder Schneebesen. Rühr- oder Auffangschüsseln sind im Gerät integriert oder können abgenommen werden; teilweise sind eigene Werkzeuge fest eingebaut. Manche Zusatzgeräte sind komplette Einheiten (Fleischwolf, Saftpresse), die nur den Antrieb der Maschine nutzen. Die Drehzahl bei elektrischen Geräten kann meistens in mehreren Stufen reguliert werden oder ist stufenlos regelbar. Zum Anschließen der Bearbeitungswerkzeuge weisen Küchenmaschinen wenigstens eine Schnittstelle bzw. Ankoppelstellen auf, die eingerichtet ist, um Werkzeuge mit dem elektrischen Antrieb zu verbinden.

Diese Küchenmaschinen weisen im Wesentlichen ein L-förmiges Grundgehäuse mit einem waagerechten Sockelteil auf. An diesem waagerechten Sockelteil kann eine Verarbeitungsschüssel angeordnet werden, in welcher die gewünschten Zutaten mit Hilfe des Werkzeugs verarbeitet werden können. Weiter weisen diese gattungsgemäßen Küchenmaschinen einen Auslegearm auf, der mit Hilfe eines Gelenks an einem Grundgehäuse angebracht ist. Der Auslegearm weist eine Reihe an Ankoppelstellen für oben genanntes Werkzeug auf. Um beispielsweise die Verarbeitungsschüssel entfernen zu können, weist der Auslegearm eine schwenkbare Lagerstelle am Grundgehäuse auf, so dass durch das Hochklappen des Arms die Verarbeitungsschüssel leicht abgenommen werden kann. Ein weiterer Vorteil der schwenkbaren Lagerung des Auslegearms am Grundgehäuse kann beispielsweise die platzsparende Aufbewahrung der Küchenmaschine ermöglichen, da der Auslegearm in einer senkrechten Position fixiert werden kann. In dieser Position können ferner weitere Koppelstellen bereitgestellt werden, beispielsweise ein Mixeraufsatz oder desgleichen.

Um die Schwenkbewegungen des Auslegearms zu kontrollieren, umfassen die die Geräte unterschiedliche Vorrichtungen am Grundgehäuse auf. So offenbart die WO 2008/132429 A1 eine Universalküchenmaschine der genannten Art mit einem Auslegearm, dessen Bewegung mit Hilfe einer elastischen Feder gesteuert wird. Ferner weist das Küchengerät ein Dämpfungsmittel auf, welches der Federkraft entgegenwirkt, um ein unkontrolliertes Aufklappen des Arms zu vermeiden. Das Dämpfungsmittel entspricht einem hydraulischen Dämpfer und kann gemäß der WO 2008/132429 A1 unterschiedliche Dämpfungsgrade aufweisen. Diese Konstruktion hat sich als unflexibel und kompliziert erwiesen, da die Federkraft ein entsprechendes Drehmoment auf den Schwenkarm ausübt, welches einem einseitigen Aufschwenken des Arms entspricht. Weiter kann gemäß dieser Konstruktion keine im Wesentlichen vertikale Position des Schwenkarms gewährleistet werden.

### Der Erfindung zugrundeliegende Aufgabe

Der Erfindung liegt die Aufgabe zugrunde, ein gegenüber dem Stand der Technik verbessertes Küchengerät bereitzustellen, das einen zuverlässigen Betrieb gewährleistet. Weiter liegt der Erfindung die Aufgabe zugrunde, ein Verfahren zur Herstellung eines Küchengeräts bereitszustellen.

### Erfindungsgemäße Lösung

Die Lösung der gestellten Aufgaben gelingt durch ein Küchengerät mit den Merkmalen des Anspruchs 1 bzw. durch ein Verfahren gemäß Anspruch 11. Das erfindungsgemäße Küchengerät baut auf herkömmliche Küchengeräte dadurch auf, dass es ein Mittel zum Justieren der Hebeleinrichtung aufweist, welches ausgebildet ist, um das Maß des Unterstützens der Schwenkbewegung des Schwenkarms einzustellen. Das Mittel zum Justieren erlaubt die Kompensation von Bauteiltoleranzen des Küchengeräts und/oder von Reibungseffekten innerhalb der Hebeleinrichtung oder der Lagerstelle, an welcher der Schwenkarm am Grundkörper gelagert ist. Das Küchengerät weist eine Vielzahl unterschiedlicher Bauteile auf, die herstellungsbedingt sich unterschiedlich verhalten. So kann beispielsweise die Lagerstelle abhängig von den verwendeten Bauteilen ein unterschiedliches Reibungsverhalten aufweisen. Die Hebeleinrichtung würde daher die Schwenkbewegung des Schwenkarms nicht mehr genau und sicher für einen Benutzer unterstützen können. Das Mittel zum Justieren gewährleistet ein gleichbleibendes Maß an Unterstützung trotz herstellungsbedingten und/oder montagebedingten Tolleranzen, die zu unterschiedlichen Funktionsverhalten der verwendeten Bauteile führen können.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Es ist vorgesehen, dass das Mittel zum Justieren der Hebeleinrichtung ein Stellglied umfasst. Durch das Stellglied kann ein benutzerfreundliches und/oder produktionsfreundliches Justieren der Hebeleinrichtung erreicht werden. Dazu kann das Stellglied eine Werkzeugschnittstelle aufweisen, mit welcher ein externes Werkzeug verbindbar ist, um das Stellglied entsprechend bedient werden zu können. Es ist jedoch auch denkbar, dass das Stellglied eine Handhabe aufweist, welche zum Justieren durch direkte Interaktion eines Benutzers bedienbar ist.

Erfindungsgemäss weist das Stellglied mindestens einen Zahnradbereich auf, der mit einem Sperrklinkenmittel zusammenwirkt. Der Zahnradbereich, der mit einem Sperrklinkenmittel zusammenwirkt, erlaubt das Sichern des Stellglieds in einer gewünschten Position. Durch das Vorsehen einer Vielzahl an Zähnen der jeweiligen Zahnradbereiche kann eine geeignete Feineinstellung des Justierens erreicht werden. Das Sperrklinkenmittel kann beispielsweise am Grundkörper des Küchengeräts ausgebildet sein, jedoch auch eine separate Vorrichtung, die nachträglich am Grundkörper montiert wird, ist realisierbar. Das Sperrklinkenmittel kann beispielsweise eine Feder aufweisen, welche gegen den Zahnradbereich des Stellglieds gedrückt wird, um die gewünschte Sicherung bereitstellen zu können.

Es ist vorgesehen, dass das Stellglied am Grundkörper des Küchengeräts um eine Drehachse drehbar gelagert ist. Durch die drehbare Lagerung kann das Justieren besonders vorteilhaft gewährleistet werden, da das Stellglied eine hohe Anzahl an Einstellwinkeln einnehmen kann.

Gemäß einer Ausführungsform der vorliegenden Erfindung ist das Stellglied am Grundkörper des Küchengeräts um eine Drehachse drehbar gelagert dergestalt, dass eine komplette Drehung um die Drehachse durchführbar ist. Falls das Stellglied nur in einer Richtung drehbar ist, kann folglich durch absolvieren einer kompletten 360° Drehung dieses erneut in die Ausgangsposition gebracht werden. Anschließend kann ein zweites Justierzyklus gestartet werden.

Es ist bevorzugt, dass der Grundkörper ein Gehäuse aufweist, innerhalb welchem das Stellglied angeordnet ist. Somit wird das Äußere des Küchengeräts nicht durch das Stellglied beeinflusst werden. Das Gehäuse kann eine Abdeckhaube aufweisen, welche abnehmbar ist, um anschließend das Stellglied von einem Bediener oder von einem automatischen Werkzeug erreichbar zu sein.

Vorteilhafterweise weist die Hebeleinrichtung ein kraftaktives Mittel, insbesondere eine elastische Feder auf, wobei das Stellglied mit dem kraftaktiven Mittel, insbesondere mit der elastischen Feder, in einem Eingriffsbereich zusammenwirkt. Das kraftaktive Mittel stellt eine geeignete Unterstützungskraft für den Schwenkarm bereit, welche gemäß der vorliegenden Erfindung mittels des Stellglieds einstellbar bzw. feinjustierbar ist.

Gemäß einer Ausführungsform der vorliegenden Erfindung weist der Eingriffsbereich einen Versatz gegenüber der Drehachse des Stellglieds auf. Folglich kann eine Drehbewegung in eine translatorische Bewegung umgewandelt werden, welches zum Justieren der Hebeleinrichtung eingesetzt wird. Das bedeutet, dass der Eingriffsbereich um die Drehachse des Stellgliedes wandert, und folglich das kraftaktive Mittel anspannt oder entspannt. Somit kann die Hebeleinrichtung justiert werden.

Erfindungsgemäß bevorzugt ist der Eingriffsbereich als Eingriffswelle des Stellglieds ausgebildet, die von der entlang der Drehachse verlaufenden Hauptwelle des Stellglieds um den Versatz versetzt ist. Mit Hilfe des Versatzes kann das Maß der translatorischen Bewegung eingestellt werden, welches wiederum das Justieren der Hebeleinrichtung erlaubt.

Das Stellglied einstückig kann geformt sein. Folglich kann das Stellglied während eines Spritzgußverfahrens kostengünstig hergestellt werden. Daher können Sollbruchstellen weitgehend minimiert werden.

Das Material für das Stellglied kann verstärkt werden und insbesondere hat sich der Einsatz von Glasfasern bewährt. Als besonders vorteilhaft hat sich das Glasfasermaterial PA 6.6 GF30 herausgestellt, da es einen sehr hohen Dehnwiderstand aufweist und folglich die Kraft des kraftaktiven Mittels der Hebeleinrichtung aufnehmen kann.

Gemäß eines weiteren Aspekts der vorliegenden Erfindung wird ein Verfahren zum Einstellen einer Schwenkbewegung eines Küchengeräteschwenkarms bereitgestellt. Dazu ist ein Mittel zum Justieren der Schwenkbewegung vorgesehen. Zunächst wird das Schwenkverhalten des Schwenkarms, insbesondere messtechnisch, erfasst und anschließend in einem weiteren Schritt wird das Einstellen der Schwenkbewegung basierend auf die erfassten Parameter unter Verwendung des Justiermittels durchgeführt. Das erfindungsgemäße Verfahren wird besonders vorteilhaft währende der Endmontage eines Küchengeräts auf einer Produktionslinie automatisch durchgeführt. Ebenfalls kann das Verfahren an Einzelstücken währende der Wartung oder direkt bei einem Benutzer des Küchengeräts verarbeitet werden. In diesem Fall kann die Schwenkbewegung ohne Messmitteln erfasst werden. Dazu kann ein Benutzer das Schwenkverhalten beobachten und wunschgemäß die Schwenkbewegung mit Hilfe des Justiermittels anpassen bzw. einstellen.

Vorteilhafterweise wird das Erfassen des Schwenkverhaltens durch Messen der Schwenkbewegung, insbesondere einer Schwenkgeschwindigkeit, bereitgestellt. Die somit erhaltenen Parameter können mit vorherbestimmten Parametern verglichen werden, um folglich das Mittel zum Justieren automatisch einzustellen.

Erfindungsgemäß bevorzugt wird das Verfahren während einer Endmontage eines Küchengeräts auf einer Montagelinie automatisiert durchgeführt.

Die vorliegende Erfindung eignet sich insbesondere für Küchenmaschine oder Küchengeräte, die einen Schwenkarm und eine Vielzahl an Ankoppelstellen für Verarbeitungswerkzeug aufweisen. Durch das Mittel zum Justieren kann die Schwenkbewegung des Schwenkarms entsprechend eingestellt werden, welches die Bedienfreundlichkeit des Küchengeräts bei einem Endbenutzer wesentlich erhöht.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen:
Fig. 1 eine perspektivische Teilansicht auf ein Küchengerät gemäß der vorliegenden Erfindung;
Fig. 2 eine Explosionsansicht einer Hebeleinrichtung und des Justiermittels gemäß der vorliegenden Erfindung;
Fig. 3 eine perspektivische Ansicht der Hebeleinrichtung und des Mittels zum Justieren im zusammenmontierten Zustand gemäß der vorliegenden Erfindung;
Fig. 4 eine Frontansicht auf die Vorrichtung gemäß Fig. 2;
Fig. 5 eine Seitenansicht auf die Vorrichtung gemäß Fig. 2;
Fig. 6 eine Seitenansicht auf das am Grundkörper angeordneten Stellglied gemäß der vorliegenden Erfindung;
Fig. 7 eine Rückseitenansicht auf das Stellglied mit Bezug auf Fig. 5; und schließlich
Fig. 8 eine perspektivische Ansicht auf den Boden des erfindungsgemäßen Küchengeräts.

### Ausführliche Beschreibung der Figuren

Bei der nachfolgenden Beschreibung bevorzugter Ausgestaltungen der vorliegenden Erfindung bezeichnen gleiche Bezugszeichen gleiche oder vergleichbare Komponenten.

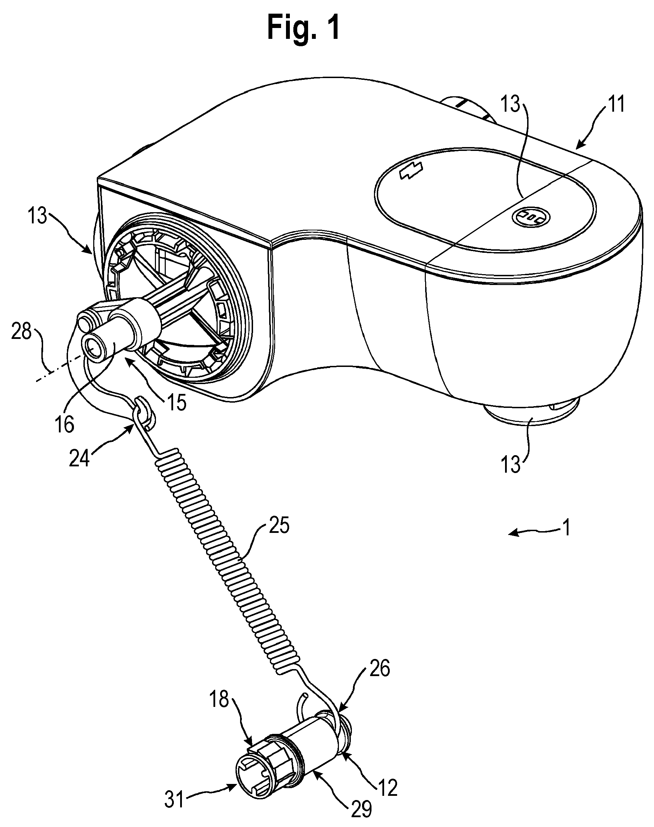

Fig. 1 zeigt eine Teilansicht eines Küchengeräts, insbesondere elektromotorisches Küchengerät 1, vorzugsweise elektromotorische Solo- oder Universalküchenmaschine gemäß der vorliegenden Erfindung. Zur Übersichtlichkeit wurde der Grundkörper 10 nicht dargestellt, um die Darstellung der Hebeleinrichtung 20 und des Mittels zum Justieren 12 genauer darlegen zu können.

Das Küchengerät 1 weist im Wesentlichen einen L-förmigen Aufbau mit einem Sockelteil 14 auf welchem eine Schüssel (nicht gezeigt) zum Aufnehmen von Nahrungsmitteln anbringbar ist. Das Küchengerät 1 umfasst einen Grundkörper 10, der in Fig. 1 nicht gezeigt ist, und einen Schwenkarm 11. Gemäß dieser Ausführungsform der vorliegenden Erfindung weist der Schwenkarm 11 eine Vielzahl an Ankoppelstellen 13 für Verarbeitungswerkzeug (nicht gezeigt). Als Verarbeitungswerkzeuge können insbesondere Pürier-, Misch-, Häcksel-, Knet- und/oder Schneidwerke, Schlag- bzw. Rührbesen, Getränkemixer, Durchlaufschnitzler, Getreidemühlen, Zitrus- bzw. Fruchtpressen und/oder Fleischwolf, gemeint sein. In Abhängigkeit von der Schwenkarmposition können einzelne Ankoppelstellen 13 betrieben werden, wobei üblicherweise der Antriebsmotor des elektrischen Küchengeräts 1 im Grundkörper 10 angeordnet ist und sein Drehmoment über geeignete Getriebeeinrichtungen an die einzelnen Ankoppelstellen 13 übertragen wird. So wird die Ankoppelstelle 13 im unteren Bereich, mit Bezug auf Fig. 1, des Schwenkarms 11 beispielsweise zum Betrieb eines Rührwerkzeugs zum Verarbeiten von Teig verwendet. Die seitlich am Schwenkarm 11 angeordnete Ankoppelstelle 13 kann zum Anschließen eines Fleischwolfs verwendet werden, wobei auch weitere Verarbeitungswerkzeuge einsetzbar sind.

Der Schwenkarm 11 wirkt mit dem Grundkörper 10 des Küchengeräts an einer Lagerstelle 15 zusammen. Die Lagerstelle 15 ist derart ausgebildet, dass der Schwenkarm 11 unterschiedliche Betriebsstellungen bzw. Betriebspositionen einnehmen kann. Fig. 1 zeigt eine erste Betriebsstellung auf, in welcher der Schwenkarm 11 horizontal fixiert ist, um beispielsweise Teig in einer Rührschüssel unterhalb der Ankoppelstelle 13 verarbeiten zu können. In dieser Betriebsstellung verläuft die Schwenkarmachse 11 im Wesentlichen horizontal. Die Lagerstelle 15 weist einen Lagerzapfen 16 auf, welcher eine Lagerachse 28 definiert. Auf diesem Lagerzapfen 16 wird in geeigneter Weise der Schwenkarm 11 angekoppelt, so dass eine einfache Schwenkbewegung gewährleistet werden kann. Der Arm 11 schwenkt folglich im Wesentlichen zwischen zwei Endstellungen, nämlich die Stellung in welcher die Schwenkarmachse parallel mit dem Grundkörper verläuft und eine weitere Stellung, in welcher die Schwenkarmachse der Verlängerung der Grundkörperachse entspricht. Durch die stufenlose Lagerung des Schwenkarms 11 an der Lagerstelle 15 sind unterschiedliche Zwischenstellungen einstellbar.

Die Hebeleinrichtung 20, die mit der Lagerstelle 15 gekoppelt ist, weist gemäß dieser Ausführungsform einen ersten Hebel 21 und einen zweiten Hebel 22 auf. Der zweite Hebel 22 wirkt in einem zweiten Gelenk 24 mit einer elastischen Feder 25 zusammen. Die elastische Feder 25 wird gemäß der vorliegenden Erfindung mit einem Mittel zum Justieren 12 der Schwenkbewegung mit dem Grundkörper 10 wirkverbunden.

Der Grundkörper 10 bietet einen festen Haltepunkt für die Feder 25, so dass die Hebeleinrichtung 20 die Federkraft zur Unterstützung des Schwenkarms 11 umsetzen kann. Der erste und der zweite Hebel 21, 22 wirken entsprechend in einem Gelenk 23 zusammen, welches die Federkraft, die auf den zweiten Hebel 22 wirkt, auf den ersten Hebel 21 überträgt. Der erste Hebel 21 ist gemäß dieser Ausführungsform an der Lagerachse 28 der Lagerstelle 15 angeordnet und überträgt das Drehmoment auf den Schwenkarm 11. Der erste Hebel 21 ist dergestalt an der Lagerstelle 15 angeordnet, dass er mit dem Schwenkarm 11 schwenkt und die Federkraft in ein Drehmoment umwandeln kann, das den Arm 11 unterstützt. Die Feder 25, welche in einem zweiten Gelenk 24 mit dem zweiten Hebel 22 zusammenwirkt, weist einen gespannten Zustand (d.h. die Feder ist gespannt) auf. Daher zieht die elastische Feder 25 an dem zweiten Hebel 22 mit einer bestimmten Kraft. Diese Kraft wird weiter über das erste Gelenk 21 an den ersten Hebel 21 übertragen. Der erste Hebel ist drehfest auf der Lagerachse 28 angeordnet, und somit wirkt ein durch die Federkraft verursachte Drehmoment auf die Lagerachse 28 bzw. auf den Lagerzapfen 16. Da die Lagerachse 28 mit dem Schwenkarm 11 verbunden ist, wirkt diese Drehmoment folglich auch auf den Schwenkarm 11. Damit der Arm 11 nicht aus dieser Betriebsstellung geschwenkt werden kann, weist das Küchengerät eine Sicherung (nicht gezeigt) oder Fixierungseinrichtung des Schwenkarms. Die Sicherung gleicht somit das Drehmoment aus, und das Küchengerät 1 kann in dieser Betriebsstellung sicher betrieben werden. Der erste Hebel 21 ist derart auf der Lagerachse 28 angeordnet, dass dieser mit dem Schwenkarm 11 synchron schwenken kann. Nachdem die oben beschrieben Sicherung gelöst wurde, zieht die Federkraft über den zweiten Hebel 22 an dem ersten Hebel 21. Dieses übt demgemäß ein Drehmoment auf den Schwenkarm 11 aus, das ein hoch klappen bzw. aufschwenken des Schwenkarms bewirkt. Durch die Dimensionierung der Hebel, können unterschiedliche Drehmomente eingestellt werden, welche an das Eigengewicht des Schwenkarms 11 angepasst werden können.

Gemäß einer möglichen Ausführungsform kann die Sicherung des Schwenkarms 11 beispielsweise mittels eines auf dem Schwenkarm 11 angeordneten Bedienknopfes (nicht dargestellt) oder wahlweise kann dieser Bedienknopf an einer geeigneten Stelle am Grundkörper 10 angeordnet sein. Das Betätigen des Bedienknopfes durch einen Benutzer bewirkt, dass der Schwenkarm 11 erneut frei schwenken kann, und somit kann das durch die Federkraft ausgeübte Drehmoment auf den Schwenkarm 11 wirken. Gemäß dieser Anordnung würde das Drehmoment ein Aufklappen des Schwenkarms bewirken, d.h. der Schwenkarm 11 bewegt sich vom Grundkörper 10 nach oben hinweg. Im aufgeklappten Zustand kann folglich die Schüssel besser erreicht werden und Zutaten wie Nahrungsmittel oder desgleichen können eingefüllt werden. Auch ein Wechsel des Verarbeitungswerkzeugs in der Ankoppelstelle 13 kann somit leichter und bedienerfreundlicher durchgeführt werden.

Gemäß einer Ausführungsform der vorliegenden Erfindung wirkt das kraftaktive Mittel, insbesondere die elastische Feder 25, mit einem dem Stellglied 12 als Justiermittel in einem Eingriffsbereich 26 zusammen. Das Stellglied ist an dem Grundkörper 10 drehbar gelagert und ist eingerichtet, um die Vorspannung der Feder 25 einstellen bzw. justieren zu können. Der Eingriffsbereich 26 des Stellglieds kann durch Drehung des Stellglieds im Wesentlichen vertikal verstellt werden, welches wiederum die Feder 25 vorspannt. Falls jedoch beispielsweise die Vorspannung der Feder einen gewünschten Wert überschreitet, kann am Stellglied entsprechend die Vorspannung entsprechend vermindert werden. Das Stellglied 12 am Grundkörper 10 ist derart drehbar gelagert, dass eine komplette 360° Drehung durchführbar ist. Ferner weist das Stellglied eine Werkzeugschnittstelle 31 auf, welche beispielsweise mit einem Arbeitswerkzeug zusammenwirkt, um das Justieren durch einen Benutzer vereinfachen zu können. Somit kann das Stellglied 12 mittels des Arbeitswerkzeugs gedreht bzw. justiert werden. Das Arbeitswerkzeug kann auch Teil einer Produktionslinie sein, so dass das Justieren beispielsweise auf einem Förderband der Produktionslinie automatisch geschehen kann. Dazu wird die Schwenkbewegung des Schwenkarms 11 testweise erfasst, und bei Bedarf kann das Stellglied 12 automatisch auf die gewünschte Vorspannung justiert werden. Dies ist ein wesentlicher Vorteil bei der Herstellung des Küchengeräts, da weitgehend auf weitere Funktionstests verzichtet werden kann.

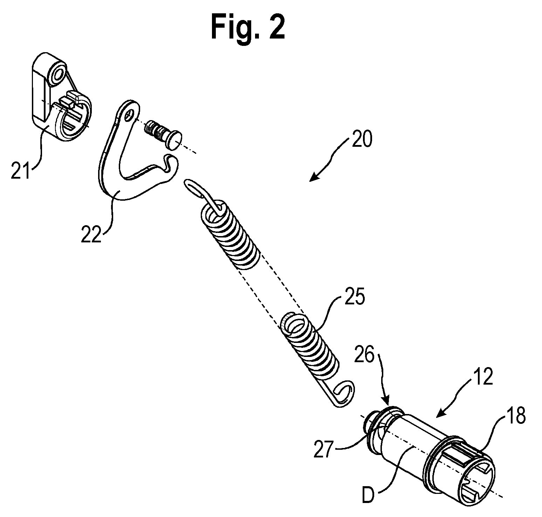

Fig. 2 zeigt eine Explosionsansicht der Hebeleinrichtung und des Stellglieds gemäß der vorliegenden Erfindung. Das Stellglied 12 weist einen Zahnradbereich auf, der mit entsprechenden Gegenmitteln am Grundkörper 10, oder am Grundkörpergehäuse 30 zusammenwirkt. Somit kann das Stellglied 12 in einer bestimmten Position gegen Drehen gesichert werden. Der Eingriffsbereich 26 weist eine Eingriffswelle 27 auf, welche exzentrisch bezüglich der Hauptdrehachse D, bzw. der Hauptwelle 29 des Stellglieds 12 ausgebildet ist. Durch die exzentrische Anordnung der Welle 27 kann die Spannung der Feder 25 durch einfaches Drehen des Stellglieds 12 eingestellt werden, wobei das Stellglied 12 seine relative Position zum Grundkörper 10 einhält.

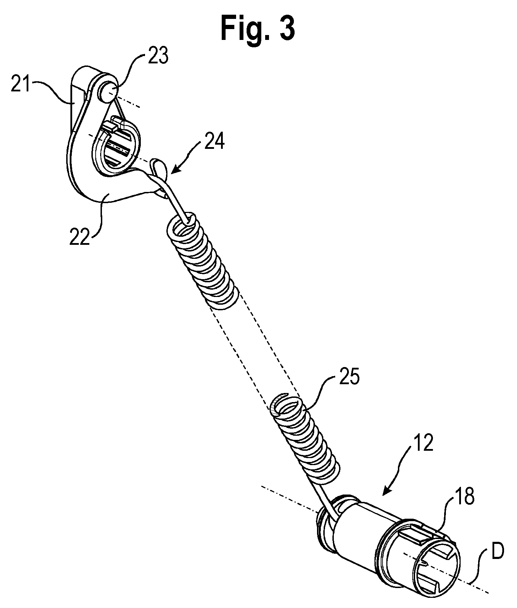

Fig. 3 entspricht der Darstellung aus Fig. 2, wobei die einzelnen Bauteile nun funktionell miteinander verbunden sind. Der erste Hebel 21 und der zweite Hebel 22 der Hebeleinrichtung 20 wirken in einem Drehgelenk 23 zusammen. Im unteren Bereich 24 des zweiten Hebels ist eine Lasche ausgebildet an welcher gemäß einer möglichen Ausführungsform eine Feder 25 befestigt ist. Somit kann die Federkraft über den ersten und den zweiten Hebel 21, 22 die Schwenkarmbewegung unterstützt werden. Im Grundkörper 10 ist; wie bereits erwähnt; das Stellglied 12 vorgesehen, das als Justiermittel für die Federspannung einsetzbar ist. Das Stellglied ist drehbar um die Achse D am Grundkörper gelagert und kann komplett um die Achse D gedreht werden. Durch den exzentrischen Aufbau kann die Federspannung während der ersten Halbkreisbewegung bzw. Drehung bis zu einem Maximalpunkt erhöht werden, wobei im weiteren Verlauf die Federspannung wieder abnimmt. Durch den Zahnradbereich 18 am Stellglied, kann dieses in der gewünschten Position gesichert werden.

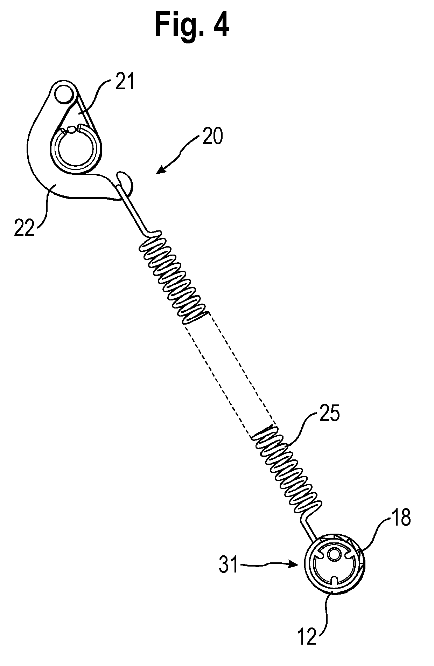

Fig. 4 entspricht der Frontansicht auf Fig. 3. Die Werkzeugschnittstelle 31 gemäß einer möglichen Ausführungsform kann mit einem Werkzeug zusammenwirken, so dass das Stellglied 12 in Drehung versetzt werden kann. Der Zahnradbereich 18 umfasst beispielhaft fünf Zähne, welche entsprechend am Grundkörper einrasten, um somit fünf mögliche Einstellungswinkel des Stellglieds 12 bereitstellen zu können.

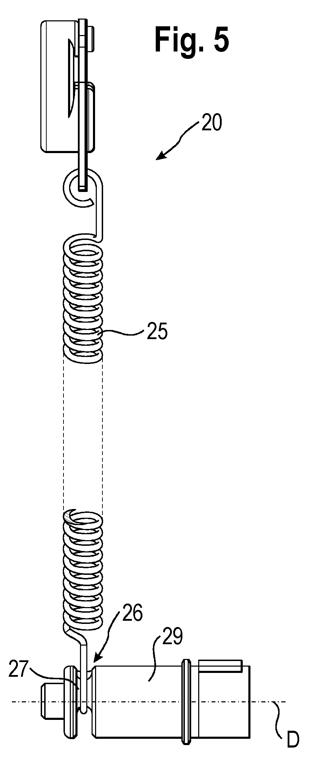

Fig. 5 entspricht einer Seitenansicht auf die Vorrichtung gemäß Fig. 2. Das Stellglied 12 weist eine Hauptwelle 29 und eine Eingriffswelle 27 auf, die im Wesentlichen mit der elastischen Feder 25 zusammenwirkt. Die Achse der Eingriffswelle 27 ist gegenüber der Hauptdrehachse D des Stellglieds 12, welches einer exzentrischen Bausweise entspricht. Somit kann die Federspannung entsprechend eingestellt werden, da der Eingriffsbereich 26 der Achse 27 entweder oberhalb oder unterhalb der Achse D abhängig vom Einstellwinkel W des Stellglieds 12 sich befindet.

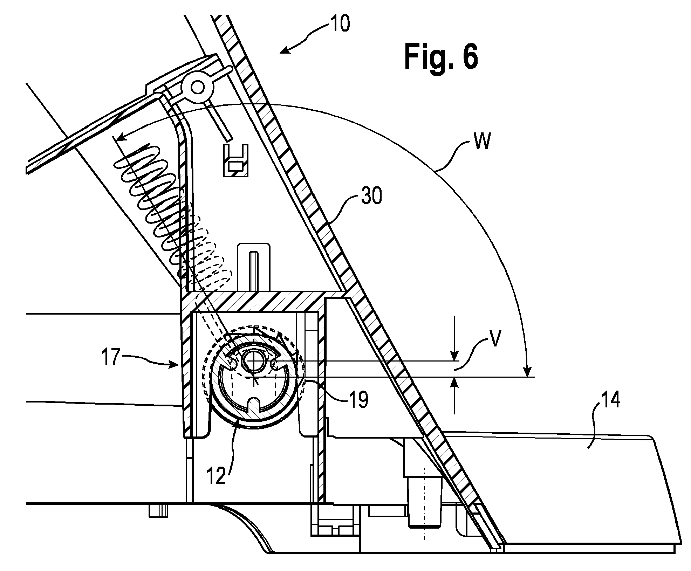

Fig. 6 zeigt eine Seiteansicht auf das am Grundkörper 10 angeordnete Stellglied 12 gemäß der vorliegenden Erfindung. Das Stellglied 12 wirkt mit dem Zahnradbereich 18 mit einem entsprechenden Sperrklinkenmittel 19 am Grundkörper zusammen. Das Sperrklinkenmittel 19 ist dergestalt ausgebildet, dass das Stellglied in einer gewünschten Position gesichert bzw. gesperrt ist und ein Rückwärtsdrehen des Stellglieds 12 kann vermieden werden. Das Sperrklinkenmittel 19 kann beispielsweise einstückig mit dem Gehäuse 30 des Grundkörpers ausgebildet werden, jedoch auch eine zusätzliche Vorrichtung, welche am Grundkörper 10 fixiert ist, kann eingesetzt werden. Das Stellglied 12 kann gemäß dieser Ausführungsform fünf Positionen einnehmen, welches einem Einstellungswinkel W mit Bezug auf die Horizontale entspricht. Die Horizontale wird durch das Sockelteil 14 des Küchengeräts definiert.

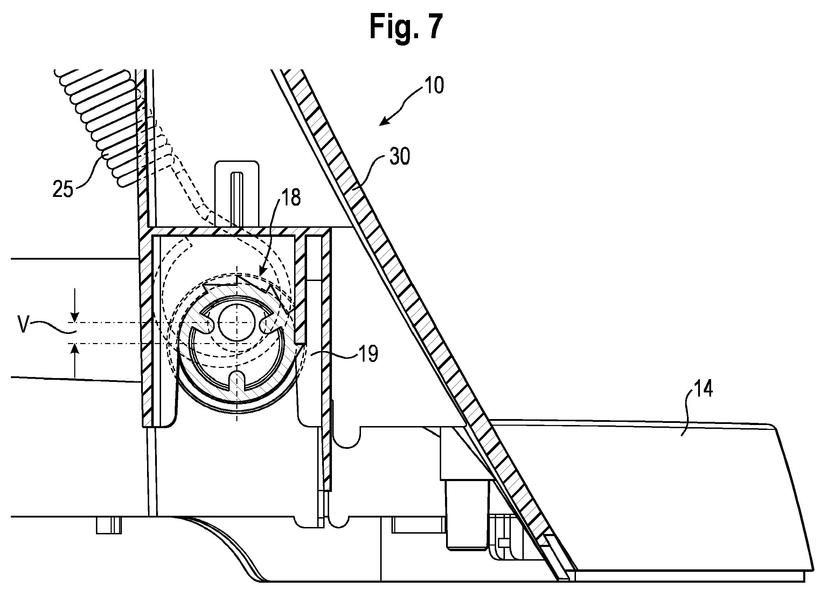

Fig. 7 zeigt eine Rückseitenansicht auf das Stellglied mit Bezug auf Fig. 5. Wie oben erwähnt weist die Welle 27 einen Versatz gegenüber der Hauptdrehachse D des Stellglieds 12 auf. Somit kann durch Drehung des Stellglieds 12 die Eingriffswelle 27 translatorisch versetzt werden, welches die Feder 25 vorspannt bzw. entspannt. Gemäß Fig. 7 würde eine Drehung des Stellgliedes 12 in Uhrzeigen Richtung einem Vorspannen der Feder 25 entsprechen. Das Sperrklinkenmittel 19 ist hier nur schematisch dargestellt und wirkt mit dem Zahnradbereich 18 zusammen, um das Stellglied in einer gesperrten Position zu halten. Gemäß dieser Ausführungsform kann das Stellglied einer kompletten Umdrehung unterzogen werden, so dass eine Vielzahl an Einstellwinkel W erreichbar sind.

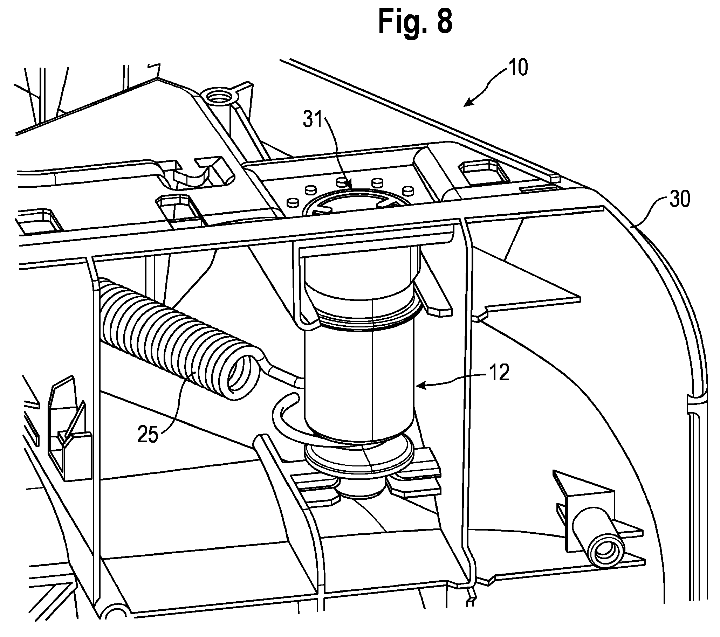

Und schließlich stellt Fig. 8 eine perspektivische Ansicht auf den Boden des erfindungsgemäßen Küchengeräts dar. Das Gehäuse 30 des Küchengeräts 1 kann beispielweise aus Kunststoff bestehen, in welchem geeignete Aufnahmemittel für das Stellglied 12 in einem Spritzgießverfahren bereitgestellt wurden. Das Stellglied 12 kann ebenfalls einstückig aus einem verstärkten Material hergestellt werden, um der Federzugspannung entgegenwirken zu können. Das Stellglied 12 kann somit einfach in das geeignete Aufnahmemittel des Gehäuses 30 des Grundkörpers 10 eingesetzt werden. Das Stellglied 12 ist komplett innerhalb des Gehäuses gelagert, so dass das Äußere des Küchengeräts 1 weiterhin angenehm für einen Endverbraucher sich darstellt, d.h. das Stellglied kann von Außen im endmontierten Zustand des Küchengeräts 1 nicht eingesehen werden. Um das Stellglied 12 bedienen zu wollen, wird beispielweise ein Werkzeug an der Werkzeugschnittstelle 31 eingesetzt, um ein Drehmoment auf das Stellglied 12 übertragen zu können.

Ferner wird ein Verfahren zum Einstellen einer Schwenkbewegung eines Küchengeräteschwenkarms 11, das an einem Küchengerätegrundkörper 10 schwenkbar gelagert ist. Diese Verfahren kann automatisch in der Endmontage des Küchengeräts 1 durchgeführt werden. Dazu wird die Schwenkbewegung des Schwenkarms 11 messtechnisch erfasst und anhand dieses Verhaltens eine geeignete Federvorspannung eingestellt. Dies ist notwendig da Bauteiltoleranzen zu einem unterschiedlichen Verhalten bei identisch aufgebauten Küchengeräten führen können. Auf Basis der gemessenen Parameter kann folglich in einem automatisierten Prozess ein Werkzeug die Werkzeugschnittstelle 31 betätigen, um das Stellglied auf eine entsprechende Position zu drehen bzw. einzustellen.

### BEZUGSZEICHENLISTE

- 1: Küchengerät
- 10: Grundkörper
- 11: Schwenkarm
- 12: Stellglied
- 13: Ankoppelstelle
- 14: Sockel bzw. Sockelteil
- 15: Lagerstelle
- 16: Lagerzapfen
- 17: Mittel zum Justieren
- 18: Zahnradbereich
- 19: Sperrklinke
- D: Drehachse des Stellglieds
- V: Exzentrischer Versatz der Eingriffswelle
- 20: Hebeleinrichtung
- 21: erster Hebel
- 22: zweiter Hebel
- 23: erstes Gelenk
- 24: zweites Gelenk
- 25: Feder
- 26: Eingriffsbereich
- 27: Eingriffswelle
- 28: Lagerachse
- 29: Hauptwelle des Stellglieds
- 30: Gehäuse
- 31: Werkzeugschnittstelle
- W: Einstellwinkel

## Patentansprüche

1. Küchengerät (1) mit einem Grundkörper (10), einem Schwenkarm (11), der schwenkbar am Grundkörper (10) angeordnet ist, und einer Hebeleinrichtung (20) zum Unterstützen einer Schwenkbewegung des Schwenkarms (11), wobei das Küchengerät (1) ein Mittel zum Justieren (17) der Hebeleinrichtung (20) aufweist, das dergestalt ausgebildet ist, um das Maß des Unterstützens der Schwenkbewegung einzusteiten, **dadurch gekennzeichnet, dass** das Mittel zum Justieren (17) der Hebeleinrichtung ein Stellglied (12) umfasst, wobei das Stellglied (12) mindestens einen Zahnradbereich (18) aufweist, der mit einem Sperrklinkenmittel (19) zusammenwirkt, und wobei das Stellglied (12) am Grundkörper (10) des Küchengeräts um eine Drehachse (D) drehbar gelagert ist.

2. Küchengerät (1) nach einem der vorhergehenden Ansprüche, **dadurch gekennzeichnet dass** das Stellglied (12) am Grundkörper (10) des Küchengeräts um eine Drehachse (D) dergestalt drehbar gelagert, dass eine komplette Drehung um die Drehachse (D) durchführbar ist.

3. Küchengerät (1) nach einem der vorhergehenden Ansprüche, **dadurch gekennzeichnet, dass** der Grundkörper (10) ein Gehäuse (30) aufweist, innerhalb welchem das Stellglied (12) angeordnet ist.

4. Küchengerät (1) nach einem der vorhergehenden Ansprüche, **dadurch gekennzeichnet, dass** die Hebeleinrichtung (20) ein kraftaktives Mittel (25), insbesondere eine elastische Feder (25) umfasst, wobei das Stellglied (12) mit dem kraftaktivem Mittel, insbesondere mit der elastischen Feder (25), in einem Eingriffsbereich (26) zusammenwirkt.

5. küchengerät (1) nach einem der vorhergehenden Ansprüche, **dadurch gekennzeichnet, dass** der Eingriffsbereich (26) einen Versatz (V) gegenüber der Drehachse (D) des Stellglieds (12) aufweist.

6. Küchengerät (1) nach einem der vorhergehenden Ansprüche, **dadurch gekennzeichnet, dass** der Eingriffsbereich (26) als Eingriffswelle (27) des Stellglieds ausgebildet ist, die von der entlang der Drehachse (D) verlaufenden Hauptwelle (29) des Stellglieds (12) um den Versatz (V) versetzt ist.

7. Küchengerät (1) nach einem der vorhergehenden Ansprüche, **dadurch gekennzeichnet, dass** das Stellglied (12) einstückig geformt ist.

8. Küchengerät (1) nach einem der vorhergehenden Ansprüche, **dadurch gekennzeichnet, dass** das Stellglied (12) aus einem verstärkten Material, insbesondere aus einem Glasfaser verstärkten Material, herstellbar ist.

9. Verfahren zum Einstellen einer Schwenkbewegung eines Schwenkarms (11) eines Küchengeräts (1), der an einem Küchengerätegrundkörper (10) schwenkbar gelagert ist, **dadurch gekennzeichnet, dass** das Küchengerät (1) ein Mittel zum Justieren der Schwenkbewegung aufweist und ein Küchengerät (1) nach einem der vorhergehenden Ansprüche ist, und das Verfahren umfasst:
- Erfassen eines Schwenkverhaltens des Küchengeräteschwenkarms (11);
- Einstellen der Schwenkbewegung des Küchengeräteschwenkarms (11) unter Verwendung des Mittels zum Justieren der Schwenkbewegung.

10. Verfahren zum Einstellen einer Schwenkbewegung eines Küchengeräteschwenkarms (11) nach Anspruch 9 **dadurch gekennzeichnet, dass** das Erfassen des Schwenkverhaltens durch Messen der Schwenkbewegung, insbesondere einer Schwenkgeschwindigkeit, bereitgestellt wird.

11. Verfahren zum Einstellen einer Schwenkbewegung eines Küchengeräteschwenkarms (11) nach einem der Ansprüche 9 oder 10 **dadurch gekennzeichnet, dass** das Verfahren während einer Endmontage des Küchengeräts auf einer Montagelinie automatisiert und/oder durch eine Montageperson durchgeführt wird.

## Claims

1. Kitchen appliance (1) having a base body (10), a pivot arm (11), which is disposed in a pivotable manner on the base body (10), and a lever facility (20) for assisting a pivoting movement of the pivot arm (11), wherein the kitchen appliance has a means for adjusting (17) the lever facility (20), which is configured to set the degree of assistance for the pivoting movement, **characterised in that** the means for adjusting (17) the lever facility comprises a control element (12), wherein the control element (12) has at least one gearwheel region (18), which interacts with a ratchet means (19), and wherein the control element (12) is supported on the base body (10) of the kitchen appliance in such a manner that it can be rotated about a rotation axis (D).

2. Kitchen appliance (1) according to one of the preceding claims, **characterised in that** the control element (12) is supported on the base body (10) of the kitchen appliance in such a manner that it can be rotated about a rotation axis (D) so that a full rotation about the rotation axis (D) can be performed.

3. Kitchen appliance (1) according to one of the preceding claims, **characterised in that** the base body (10) has a housing (30), within which the control element (12) is disposed.

4. Kitchen appliance (1) according to one of the preceding claims, **characterised in that** the lever facility (20) has a force-active means (25), in particular an elastic spring (25), the control element (12) interacting with the force-active means, in particular with the elastic spring (25), in an engagement region (26).

5. Kitchen appliance (1) according to one of the preceding claims, **characterised in that** the engagement region (26) has an offset (V) relative to the rotation axis (D) of the control element (12).

6. Kitchen appliance (1) according to one of the preceding claims, **characterised in that** the engagement region (26) is configured as an engagement shaft (27) of the control element (12), which is offset from the main shaft (29) of the control element (12) running along the rotation axis (D) by the offset (V).

7. Kitchen appliance (1) according to one of the preceding claims, **characterised in that** the control element (12) is formed as a single piece.

8. Kitchen appliance (1) according to one of the preceding claims, **characterised in that** the control element (12) can be made of a reinforced material, in particular of a material reinforced with glass fibres.

9. Method for setting a pivoting movement of a kitchen appliance pivot arm (11), which is supported in a pivotable manner on a kitchen appliance base body (10), **characterised in that** the kitchen appliance (1) has a means for adjusting the pivoting movement and is a kitchen appliance (1) according to one of the preceding claims, and the method comprises:
- detecting a pivot behaviour of the kitchen appliance pivot arm (11);
- setting the pivoting movement of the kitchen appliance pivot arm (11) using the means for adjusting the pivoting movement.

10. Method for setting a pivoting movement of a kitchen appliance pivot arm (11) according to claim 9, **characterised in that** the pivoting behaviour is detected by measuring the pivoting movement, in particular a pivot speed.

11. Method for setting a pivoting movement of a kitchen appliance pivot arm (11) according to one of claims 9 or 10, **characterised in that** the method is performed in an automated manner on an assembly line during final assembly of a kitchen appliance and/or by an assembly operator.

## Revendications

1. Appareil de cuisine (1) comprenant un corps de base (10), un bras pivotant (11) qui est disposé de manière pivotante sur le corps de base (10), et un dispositif à levier (20) destiné à soutenir un mouvement de pivotement du bras pivotant (11), l'appareil de cuisine (1) présentant un moyen d'ajustement (17) du dispositif à levier (20) qui est réalisé pour régler la mesure du soutien du mouvement de pivotement, **caractérisé en ce que** le moyen d'ajustement (17) du dispositif à levier comprend un actionneur (12), l'actionneur (12) présentant au moins une zone à roue dentée (18) qui agit avec un moyen à cliquet de blocage (19), et l'actionneur (12) étant logé sur le corps de base (10) de l'appareil de cuisine de manière rotative autour d'un axe de rotation (D).

2. Appareil de cuisine selon la revendication 1, **caractérisé en ce que** l'actionneur (12) est logé sur le corps de base (10) de l'appareil de cuisine de manière rotative autour d'un axe de rotation (D) de manière à ce qu'une rotation complète autour de l'axe de rotation (D) soit exécutable.

3. Appareil de cuisine selon l'une quelconque des revendications précédentes, **caractérisé en ce que** le corps de base (10) présente un boîtier (30) à l'intérieur duquel est logé l'actionneur (12).

4. Appareil de cuisine selon l'une quelconque des revendications précédentes, **caractérisé en ce que** le dispositif à levier (20) comprend un moyen actif par force (25), notamment un ressort élastique (25), l'actionneur (12) agissant avec le moyen actif par force, notamment avec le ressort élastique (25), dans une zone de prise (26).

5. Appareil de cuisine selon l'une quelconque des revendications précédentes, **caractérisé en ce que** la zone de prise (26) présente un décalage (V) par rapport à l'axe de rotation (D) de l'actionneur (12).

6. Appareil de cuisine selon l'une quelconque des revendications précédentes, **caractérisé en ce que** la zone de prise (26) est réalisée comme arbre de prise (27) de l'actionneur, lequel arbre de prise est décalé du décalage (V) par rapport à l'arbre principal (29) de l'actionneur (12), s'étendant le long de l'axe de rotation (D).

7. Appareil de cuisine selon l'une quelconque des revendications précédentes, **caractérisé en ce que** l'actionneur (12) est formé d'une seule pièce.

8. Appareil de cuisine selon l'une quelconque des revendications précédentes, **caractérisé en ce que** l'actionneur (12) peut être fabriqué à partir d'une matière renforcée, notamment d'une matière renforcée par fibre de verre.

9. Procédé de réglage d'un mouvement de pivotement d'un bras pivotant (11) d'un appareil de cuisine (1), lequel est logé de manière pivotante sur un corps de base (10) de l'appareil de cuisine, **caractérisé en ce que** l'appareil de cuisine (1) présente un moyen d'ajustement du mouvement de pivotement et **en ce qu'**il est un appareil de cuisine (1) selon l'une quelconque des revendications précédentes, et **en ce que** le procédé comprend :
- enregistrement d'un comportement de pivotement du bras pivotant (11) de l'appareil de cuisine ;
- réglage du mouvement de pivotement du bras de pivotement (11) de l'appareil de cuisine en utilisant le moyen d'ajustement du mouvement de pivotement.

10. Procédé de réglage d'un mouvement de pivotement d'un bras pivotant (11) d'un appareil de cuisine selon la revendication 9, **caractérisé en ce que** l'enregistrement du comportement de pivotement est fourni par mesure du mouvement de pivotement, notamment d'une vitesse de pivotement.

11. Procédé de réglage d'un mouvement de pivotement d'un bras pivotant (11) d'un appareil de cuisine selon l'une quelconque des revendications 9 ou 10, **caractérisé en ce que** le procédé est automatisé sur une ligne de montage et/ou est exécuté par une personne de montage pendant un montage final de l'appareil de cuisine.
